# EUROPEAN PATENT APPLICATION

(11) **EP 4 131 191 A1**
(43) Date of publication of application: **08.02.2023**
(21) Application number: 21774430.9
(22) Date of filing: 22.03.2021
(51) Int. Cl.: G07D 11/26, G07D 11/40

(54) **VALUABLE MEDIUM PROCESSING DEVICE, VALUABLE MEDIUM PROCESSING SYSTEM, AND AUTHENTICATION METHOD**

(30) Priority: 24.03.2020 JP 2020052717
(71) Applicant: GLORY LTD., Himeji-shi Hyogo 670-8567 (JP)
(72) Inventor: OKIZUKA, Hiromichi, Himeji-shi, Hyogo 670-8567 (JP); UEDA, Kento, Himeji-shi, Hyogo 670-8567 (JP)
(74) Representative: Epping - Hermann - Fischer
(86) International application number: PCT/JP2021/011764
(87) International publication number: WO 2021/193558

(57) **Abstract**

A valuable medium processing device that processes a valuable medium and comprises: an acquisition unit that acquires information related to an operation result for the valuable medium processing device; and an outputting unit that outputs first authentication information to an external device. The first authentication information is for use in authentication of the valuable medium processing device and includes the information related to the operation result for the valuable medium processing device acquired by the acquisition unit.

## Description

### Technical Field

The present disclosure relates to a valuable medium handling apparatus, a valuable medium handling system, and an identification method.

### Background Art

The network system of Patent Literature 1 comprises equipment and a collection apparatus which is communicatively connected to the equipment via a network. The equipment transmits identification information to the collection apparatus via the network. The collection apparatus performs identification of the equipment by using the identification information transmitted from the equipment. When this identification is successfully made, the collection apparatus performs registration of the equipment.

### Citation List

### Patent Literature

PTL 1
Japanese Patent Application Laid-Open No. 2019-16880

### Summary of Invention

### Technical Problem

For an identification method of outputting identification information from equipment as described above, it has been demanded to improve the security of identification information in order to eliminate registration of equipment made by an impersonating third party.

The present disclosure has been made for solving the above-mentioned problem, and an object thereof is to improve the security of identification information used for identification of a valuable medium handling apparatus.

To achieve this object, a valuable medium handling apparatus according to the present disclosure is a valuable medium handling apparatus that handles a valuable medium and includes: an acquisition unit that acquires information on an operation result of the valuable medium handling apparatus; and an output unit that outputs, to an external apparatus, first identification information which includes the information on the operation result of the valuable medium handling apparatus acquired by the acquisition unit and which is used for identification of the valuable medium handling apparatus.

Further, a valuable medium handling system according to the present disclosure is a valuable medium handling system including a valuable medium handling apparatus that handles a valuable medium and an external apparatus communicatively connected with the valuable medium handling apparatus, in which the valuable medium handling apparatus includes: an acquisition unit that acquires information on an operation result of the valuable medium handling apparatus; and an output unit that outputs, to the external apparatus, first identification information including the information on the operation result of the valuable medium handling apparatus acquired by the acquisition unit, and in which the external apparatus includes an identification unit that identifies the valuable medium handling apparatus by using the first identification information output by the output unit.

Further, an identification method according to the present disclosure includes: acquiring, in the valuable medium handling apparatus, information on an operation result of the valuable medium handling apparatus that handles a valuable medium; outputting first identification information including the information on the operation result of the valuable medium handling apparatus from the valuable medium handling apparatus to an external apparatus; and identifying, in the external apparatus, the valuable medium handling apparatus by using the first identification information.

### Advantageous Effects of Invention

According to a valuable medium handling apparatus, a valuable medium handling system, and an identification method of the present disclosure, it is possible to improve the safety of identification information used for identification of a valuable medium handling apparatus.

### Brief Description of Drawings

FIG. 1 is a block diagram of a banknote handling system according to the first embodiment of the present disclosure;
FIG. 2 is an exterior view of a banknote handling apparatus illustrated in FIG. 1;
FIG. 3 is a schematic view of the banknote handling apparatus illustrated in FIG.2;
FIG. 4 is a flowchart of a program executed by a control unit of an external apparatus illustrated in FIG. 1;
FIG. 5 is a block diagram of a banknote handling system according to the second embodiment of the present disclosure; and
FIG. 6 is an exterior view of a coin change machine and a banknote change machine illustrated in FIG. 5.

### Detailed Description of the Invention

A valuable medium is a paper-or resin-based medium that has a predetermined value. Examples of the valuable media include a banknote, a coin, a check, and a ticket. A valuable medium handling apparatus is an apparatus that performs at least one of kinds of the following processing for valuable media: recognition processing; counting processing; sorting processing; deposit processing; dispense processing; issuance processing; and exchange processing. The valuable medium handling apparatus may be any of a money recognition machine, a money counting machine, a money sorting machine, a money deposit machine, a check deposit machine, a money dispense machine, a check issuance machine, a money change machine, an automated teller machine (ATM), and an automatic change machine.

### <First embodiment>

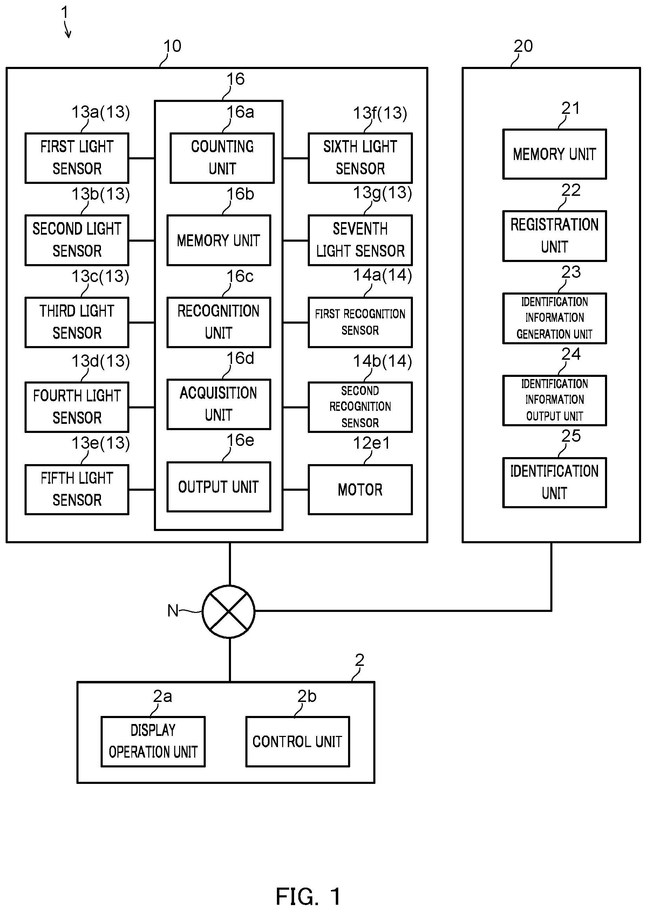

Hereinafter, a valuable medium handling system according to the first embodiment of the present disclosure will be described with reference to the accompanying drawings. A banknote handling system 1 comprises a banknote handling apparatus 10, and an external apparatus 20 communicatively connected to the banknote handling apparatus 10 via a network N, as illustrated in FIG. 1. The banknote handling system 1 is an exemplary "valuable medium handling system." The banknote handling apparatus 10 is an exemplary "valuable medium handling apparatus."

In the banknote handling system 1, information on the banknote handling apparatus 10 is registered in the external apparatus 20. The registered banknote handling apparatus 10 is provided with software update information and/or the like from a vendor of the banknote handling apparatus 10. In addition, a processing result and/or state information of the banknote handling apparatus 10 is provided to the external apparatus 20 from the banknote handling apparatus 10. The banknote handling apparatus 10 and the external apparatus 20 are each communicatively connected, via the network N, with a terminal device 2 of a registrant who registers the banknote handling apparatus 10. The network N may use wired communication or use wireless communication.

The banknote handling apparatus 10 handles a valuable medium. The medium is a banknote. The banknote handling apparatus 10 executes processing such as counting of banknotes and recognition of banknotes.

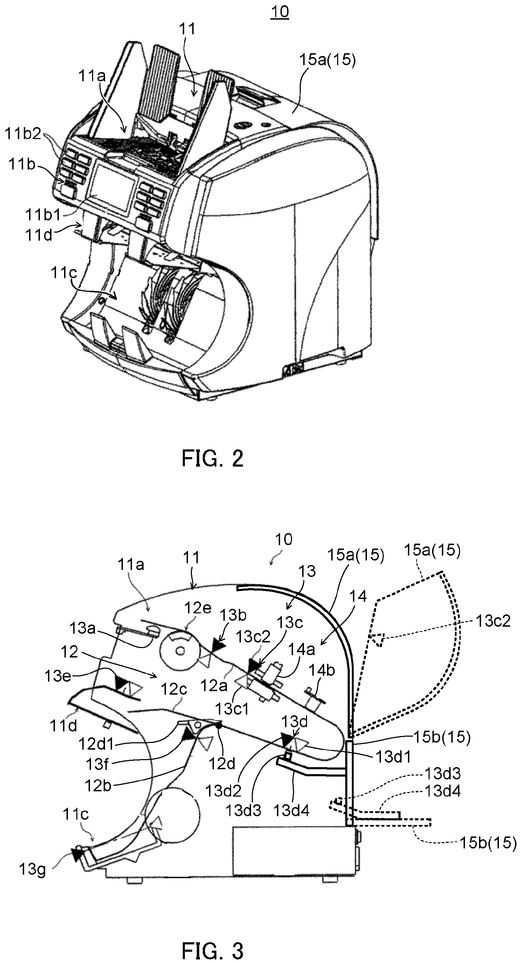

In the banknote handling apparatus 10, as illustrated in FIGS. 2 and 3, a hopper unit 11a, an operation unit 11b, a stacking unit 11c, and a reject unit 11d are disposed on an outer side of a main body unit 11.

The hopper unit 11a is a portion where banknotes for which the processing has not been started yet are placed in a stack.

The operation unit 11b comprises a display unit that displays a state of processing such as counting of banknotes, and an input unit for performing various settings of the banknote handling apparatus 10. The display unit is, for example, a display 11b1. The input unit is, for example, a plurality of switches 11b2. The operation unit 11b may comprise only one of the display unit and the input unit.

The stacking unit 11c is a portion where the banknotes for which the processing has been ended are placed in a stack.

The reject unit 11d is a portion where the banknotes that have been excluded from the processing object are placed in a stack.

Further, inside the main body unit 11, a transport unit 12, light sensors 13, and recognition sensors 14 are arranged. The light sensors 13 and the recognition sensors 14 are each an exemplary "sensor."

The transport unit 12 transports banknotes. The transport unit 12 comprises first to third transport units 12a to 12c, a diversion unit 12d, and a feeding mechanism unit 12e. The first transport unit 12a connects between the hopper unit 11a and the diversion unit 12d. The second transport unit 12b connects between the diversion unit 12d and the stacking unit 11c. The third transport unit 12c connects between the diversion unit 12d and the reject unit 11d.

The diversion unit 12d is equipped with a distribution member 12d1, and the banknotes transported by the first transport unit 12a are distributed to one of the second transport unit 12b and the third transport unit 12c.

The feeding mechanism unit 12e separates one by one the banknotes placed on the hopper unit 11a and feeds them to the first transport unit 12a. The feeding mechanism unit 12e is driven by a motor 12e1.

The light sensor 13 is a sensor that detects information on each of the banknotes. The information on a banknote detected by the light sensor 13 includes the presence or absence of the banknote and the passage of the banknote in the transport unit 12. The presence or absence of the banknote and the number of banknotes passing through the transport unit 12 are detected based on a detection signal output by the light sensor 13. The light sensor 13 is a photo-interrupter or a photo-reflector. In a case where light emitted by a light emission unit of the photo-interrupter is not detected by a light receiving unit because the light is blocked by a banknote or the like, the light sensor 13 outputs a detection signal indicating that the light cannot be received (hereinafter described as a non-light receiving signal). The light receiving unit of the photo-interrupter may directly detect the light emitted by the light emission unit or may detect light emitted by the light emission unit and then reflected by a reflection mirror. The presence or absence of the banknote and the number of banknotes passing through the transport unit 12 are detected based on the non-light receiving signal output by the photo-interrupter. On the other hand, in a case where light emitted by the light emission unit of the photo-reflector is reflected by a banknote or the like and thus detected by the light receiving unit, the light sensor 13 outputs a detection signal indicating that the light has been successfully received (hereinafter described as a light receiving signal). The presence or absence of the banknote and the number of banknotes passing through the transport unit 12 are detected based on the light receiving signal output by the photo-reflector. Note that, a plurality of light sensors 13 (seven in the present embodiment) is arranged.

A first light sensor 13a is a photo-reflector, which is disposed on the hopper unit 11a and detects the presence or absence of a banknote placed on the hopper unit 11a.

A second light sensor 13b is a photo-interrupter, which is disposed on a side of the diversion unit 12d relative to the feeding mechanism unit 12e in the first transport unit 12a and detects the passage of the banknote.

A third light sensor 13c is a photo-interrupter, which is disposed on a side of the diversion unit 12d relative to the second light sensor 13b in the first transport unit 12a and detects the passage of a banknote. The third light sensor 13c is the photo-interrupter, in which a light emission unit 13c1 and a light receiving unit 13c2 are arranged to face each other.

A fourth light sensor 13d is a photo-interrupter, which is disposed on a side of the diversion unit 12d relative to the third light sensor 13c in the first transport unit 12a and detects the passage of a banknote. The fourth light sensor 13d comprises a reflection mirror 13d3 that reflects light emitted by the light emission unit 13d1, toward the light receiving unit 13d2. The reflection mirror 13d3 is supported by a support member 13d4.

A fifth light sensor 13e is a photo-reflector, which is disposed on the reject unit 11d and detects the presence or absence of a banknote placed on the reject unit 11d.

A sixth light sensor 13f is a photo-interrupter, which is disposed on the second transport unit 12b and detects the passage of a banknote.

A seventh light sensor 13g is a photo-interrupter, which is disposed on the stacking unit 11c and detects the presence or absence of a banknote placed on the stacking unit 11c.

The recognition sensor 14 is a sensor that detects information on a banknote. The information on the banknote detected by the recognition sensor 14 is information for recognizing the banknote. A plurality of recognition sensors 14 (two in the present embodiment) is arranged.

A first recognition sensor 14a is disposed between the third light sensor 13c and the fourth light sensor 13d in the first transport unit 12a and acquires an image of a banknote. The first recognition sensor 14a is, for example, an image sensor. The image of the banknote acquired by the first recognition sensor 14a is used to recognize the type of banknote, the posture of banknote, and the authenticity of banknote (details will be described later).

A second recognition sensor 14b is disposed between the first recognition sensor 14a and the fourth light sensor 13d in the first transport unit 12a and detects a magnetic component (e.g., strength of magnetic field) of a banknote. The second recognition sensor 14b is, for example, a magnetic sensor. The magnetic component detected by the second recognition sensor 14b is used to recognize the authenticity of banknote (details will be described later).

Meanwhile, the banknote handling apparatus 10 comprises a movable unit 15 disposed displaceably with respect to the main body unit 11. The movable unit 15 is a lid member for opening and closing the main body unit 11. When the main body unit 11 is opened by displacement of the movable unit 15, banknote handling apparatus 10 can be maintained, and the like. The movable unit 15 is disposed on a part other than the operation unit 11b in the main body unit 11. The banknote handling apparatus 10 comprises a plurality of movable units 15 (two in the present embodiment).

A first movable unit 15a is formed so as to cover a rear side of an upper portion of the main body unit 11. The first movable unit 15a is displaced from a closed position where the main body unit 11 is closed (see solid line in FIG. 3) to an open position where the main body unit 11 is opened (see dashed line in FIG. 3), by turning clockwise in a side view about a lower end.

The first movable unit 15a is equipped with the light receiving unit 13c2 of the third light sensor 13c. When the first movable unit 15a is displaced to the open position, the light receiving unit 13c2 of the third light sensor 13c is displaced to a position where light from the light emission unit 13c1 of the third light sensor 13c cannot be detected. Accordingly, in this case, a non-light-receiving signal is output from the third light sensor 13c.

A second movable unit 15b is formed so as to cover a rear side of a lower portion of the main body unit 11. The second movable unit 15b is displaced from a closed position (see solid line in FIG. 3) to an open position (see dashed line in FIG. 3), by turning clockwise in a side view about the lower end.

Further, the second movable unit 15b is equipped with the support member 13d4 that supports the reflection mirror 13d3. When the second movable unit 15b is displaced from the close position to the open position, the support member 13d4 and the reflection mirror 13d3 are also displaced. The displacement of the reflection mirror 13d3 puts the light receiving unit 13d2 of the fourth light sensor 13d into a state where the light from the light emission unit 13d1 of the fourth light sensor 13d cannot be detected. Accordingly, in this case, a non-light receiving signal is output from the fourth light sensor 13d.

Further, the banknote handling apparatus 10 comprises a control unit 16 that integrally controls the banknote handling apparatus 10. The control unit 16 acquires the non-light-receiving signal from the light sensor 13 and the detection signal from the recognition sensor 14. The control unit 16 comprises a counting unit 16a, a memory unit 16b, a recognition unit 16c, an acquisition unit 16d, and an output unit 16e.

The counting unit 16a counts banknotes transported by the transport unit 12 based on the detection signal from the light sensor 13. For example, when the banknotes are transported from the hopper unit 11a to the stacking unit 11c, a non-light receiving signal from the sixth light sensor 13f is output. The number of times the non-light receiving signal from the sixth light sensor 13f is output corresponds to the number of banknotes transported from the hopper unit 11a to the stacking unit 11c. A counting result of the counting unit 16a is output to the acquisition unit 16d. Incidentally, the counting unit 16a may count banknotes based on the detection signal output from the recognition sensor 14.

The memory unit 16b stores information on a banknote required to recognize, for example, the type of banknote. The memory unit 16b specifically stores an entire image of a face/back of a genuine banknote, an image of a feature portion thereof, and dimensions, a position of the feature portion, a position of the serial number, a threshold value of the magnetic component, and the like of the genuine banknote.

The recognition unit 16c recognizes the information on a banknote based on at least one of the detection signal output from the light sensor 13 and the detection signal output from the recognition sensor 14. The recognition unit 16c specifically recognizes a transport state of a banknote and information of the banknote.

The transport state of a banknote recognized by the recognition unit 16c is a posture of the banknote in the transport unit 12 (specifically, orientation of banknote relative to transport direction and face/back of banknote). The recognition unit 16c recognizes the orientation of the banknote relative to the transport direction based on the entire image of the banknote detected by the first recognition sensor 14a. The recognition unit 16c recognizes the orientation of the banknote relative to the transport direction based on the time when the light sensor 13 outputs the detection signal.

Further, the recognition unit 16c compares the entire image of the face/back of the banknote stored in the memory unit 16b with the entire image of the banknote detected by the first recognition sensor 14a and then recognizes the face/back of the banknote. The recognition unit 16c may recognize the face/back of the banknote based on the image of the feature portion of the banknote.

Further, the information of the banknote, which is recognized by the recognition unit 16c, includes the type of banknote, information displayed on the banknote (e.g., character information such as serial number), the size of banknote, and whether magnetic ink is used.

The recognition unit 16c compares the entire image of the banknote stored in the memory unit 16b with the entire image of the banknote detected by the first recognition sensor 14a and then recognizes the type of banknote. The recognition unit 16c may recognize the type of banknote based on the image of the feature portion of the banknote. Further, the recognition unit 16c may use the size of banknote to recognize the type of banknote. The size of banknote is calculated from the entire image of the banknote detected by the first recognition sensor 14a. A part of the size of banknote may be calculated based on the detection signal from the light sensor 13. In addition, the recognition unit 16c recognizes the information displayed on the banknote from the image of the banknote detected by the first recognition sensor 14a.

The recognition unit 16c also recognizes the authenticity of banknote. For example, the recognition unit 16c compares the threshold value of the magnetic component stored in the memory unit 16b with the magnetic component detected by the second recognition sensor 14b and then recognizes whether the magnetic ink is used in the banknote. The recognition unit 16c recognizes the authenticity of banknote based on whether the magnetic ink is used. A recognition result of the recognition unit 16c is output to the acquisition unit 16d.

The acquisition unit 16d acquires information on an operation result of the banknote handling apparatus 10. The operation result of the banknote handling apparatus 10 is information on operation results of the light sensor 13 and the recognition sensor 14, or an operation result of the movable unit 15.

The information on the operation result of the light sensor 13 includes, the counting result of the counting unit 16a based on the detection signal from the light sensor 13 mentioned above, the recognition result of the recognition unit 16c based on the detection signal from the light sensor 13 mentioned above (specifically, orientation of banknote and size of banknote), and the presence or absence of a detection target based on the detection signal from the light sensor 13.

When a banknote is present in the hopper unit 11a, the acquisition unit 16d acquires a light receiving signal from the first light sensor 13a which is a photo-reflector. When a banknote is present in the reject unit 11d, the acquisition unit 16d acquires a light receiving signal from the fifth light sensor 13e which is a photo-reflector. Further, when a banknote is present in the stacking unit 11c, the acquisition unit 16d acquires a non-light receiving signal from the seventh light sensor 13g which is a photo-interrupter.

Further, when a banknote is transported from the hopper unit 11a to the stacking unit 11c, the banknote passes through the second to fourth, and sixth light sensors 13b to 13d, and 13f. In this case, the acquisition unit 16d continuously acquires non-light receiving signals from the second to fourth, and sixth light sensors 13b to 13d, and 13f, which are photo-interrupters, within a predetermined time (e.g., 0.5 seconds). On the other hand, when the banknote is transported from the hopper unit 11a to the reject unit 11d, the banknote passes through the second to fourth light sensors 13b to 13d, the acquisition unit 16d continuously acquires non-light receiving signals from the second to fourth light sensors 13b to 13d within the predetermined time.

The information on the operation result of the recognition sensor 14 is the recognition result of the recognition unit 16c based on the detection signal from the recognition sensor 14. The information on the operation result of the recognition sensor 14 is specifically at least one of the orientation of the banknote, the face/back of the banknote, the type of banknote, the authenticity of banknote, the information displayed on the banknote (e.g., character information such as serial number), and whether the magnetic ink is used, which are mentioned above.

The information on the operation result of the movable unit 15 is information indicating that the movable unit 15 has operated. The operation of the movable unit 15 can be detected based on, for example, the detection signal from the light sensor 13. Specifically, the operation of the movable unit 15 can be detected based on a change in the detection signal from light sensor 13. More specifically, since the light sensor 13 is a photo-interrupter, the information on the operation result of the movable unit 15 can be detected based on the change in the detection signal from the light sensor 13, from the light receiving signal to the non-light receiving signal.

For example, when the first movable unit 15a operates to be displaced from the close position to the open position, the detection signal from the third light sensor 13c changes from a light-receiving signal to a non-light receiving signal, as mentioned above. The acquisition unit 16d acquires the non-light receiving signal from the third light sensor 13c. The third light sensor 13c also serves as a sensor for detecting the passage of a banknote. Therefore, acquiring the non-light receiving signal from the third light sensor 13c alone may not be enough to distinguish between the operation of the first movable unit 15a to be displaced from the close position to the open position and detection of a banknote by the third light sensor 13c. The acquisition unit 16d also monitors changes in detection signals from other light sensors 13. In a case where the first movable unit 15a is opened, it is considered that no banknote is being transported to the transport unit 12. At this time, since no banknote is transported to the transport unit 12, the detection signals from the other light sensors 13 do not change. Thus, the acquisition unit 16d acquires detection signals from the third light sensor 13c and other light sensors 13 and then detects that the first movable unit 15a has been displaced from the close position to the open position.

Further, when the second movable unit 15b operates to be displaced from the close position to the open position, the detection signal from the fourth light sensor 13d changes from a light receiving signal to a non-light receiving signal, as mentioned above. The acquisition unit 16d acquires the non-light receiving signal from the fourth light sensor 13d. The fourth light sensor 13d also serves as a sensor for detecting the passage of a banknote. Therefore, acquiring the non-light-receiving signal from the fourth light sensor 13d alone may not be enough to distinguish between the operation of the second movable unit 15b to be displaced from the close position to the open position and detection of a banknote by the fourth light sensor 13d. The acquisition unit 16d monitors also changes in detection signals from other light sensors 13. In a case where the second movable unit 15b is opened, it is considered that no banknote is being transported to the transport unit 12. At this time, since no banknote is being transported to the transport unit 12, the detection signals from the other light sensors 13 do not change. Thus, the acquisition unit 16d acquires detection signals from the fourth light sensor 13d and other light sensors 13 and then detects that the second movable unit 15b has been displaced from the close position to the open position.

The output unit 16e outputs first identification information used for identification of the banknote handling apparatus 10 to the external apparatus 20. The first identification information comprises information on the operation result of the banknote handling apparatus 10 acquired by the acquisition unit 16d (details will be described later).

The output unit 16e outputs the information acquired by the acquisition unit 16d as the first identification information when the banknote handling apparatus 10 is in a registration mode. The registration mode is an operation mode of the banknote handling apparatus 10 when the banknote handling apparatus 10 is registered in the external apparatus 20. The banknote handling apparatus 10 may be configured to turn into the registration mode when a predetermined input from the operation unit 11b is performed. Further, the banknote handling apparatus 10 may be configured to turn into the registration mode when the acquisition unit 16d acquires information on a predetermined operation result of the banknote handling apparatus 10. The predetermined operation result of the banknote handling apparatus 10 is information on the operation results of the light sensor 13 and the recognition sensor 14, or the operation result of the movable unit 15. The predetermined operation result includes, for example, putting the first and second movable units in the open position while placing a banknote on the hopper unit 11a, and the like.

The terminal device 2 is, for example, a portable terminal device (e.g., smart phone) possessed by a person who registers the banknote handling apparatus 10 in the external apparatus 20. The terminal device 2 comprises a display operation unit 2a and a control unit 2b.

The display operation unit 2a comprises a display function and an input function in which information is input by being operated. The display operation unit 2a is, for example, a touchscreen.

The control unit 2b displays the information transmitted from the external apparatus 20 on the display operation unit 2a. The control unit 2b also outputs the information input from the display operation unit 2a to the external apparatus 20.

The external apparatus 20 is, for example, a server. The external apparatus 20 comprises a memory unit 21, a registration unit 22, an identification information generation unit 23, an identification information output unit 24, and an identification unit 25.

The memory unit 21 stores information on a user of the banknote handling apparatus 10 and information on the banknote handling apparatus 10. The information on the user and the information on the banknote handling apparatus 10 may be stored in association with each other.

The information on the user is information for recognizing the user, specifically, a user ID and a password of the user. The information on the banknote handling apparatus 10 is information for recognizing the banknote handling apparatus 10, such as a vendor, a model, and a serial number of the banknote handling apparatus 10. The information on the banknote handling apparatus 10 stored in the memory unit 21 is information on a banknote handling apparatus 10 manufactured by the vendor and already being sold, or information on a banknote handling apparatus 10 to be sold soon. Moreover, the information on the banknote handling apparatus 10 stored in the memory unit 21 is information on a banknote handling apparatus 10 already registered in the banknote handling system 1, or information on a banknote handling apparatus 10 to be registered soon.

The memory unit 21 also stores software update information to be used in the banknote handling apparatus 10. The software is, for example, the latest information required to recognize the type of banknote and/or the authenticity of banknote. The information in the memory unit 21 is updated by the vendor.

The registration unit 22 performs registration processing in which information on the banknote handling apparatus 10 is registered. The registration refers to storing information on the banknote handling apparatus 10 in the memory unit 21 and putting the banknote handling apparatus 10 under the control of the banknote handling system 1. The registered banknote handling apparatus 10 is provided with software update information and the like from the vendor of the banknote handling apparatus 10. In addition, a processing result and/or state information of/on the banknote handling apparatus 10 is provided to the external apparatus 20 from the banknote handling apparatus 10. The external apparatus 20 manages software version information and/or maintenance information on the registered banknote handling apparatus 10. In addition, the external apparatus 20 manages working information, failure information, and the like on the registered banknote handling apparatus 10. When identification of the banknote handling apparatus 10 by the identification unit 25 to be described later is successfully made, the registration unit 22 stores the information on the banknote handling apparatus 10 in the memory unit 21.

The identification information generation unit 23 generates second identification information used for identification of the banknote handling apparatus 10. The second identification information is generated based on the information on the banknote handling apparatus 10 stored in the memory unit 21. The identification information generation unit 23 generates the second identification information, using information that can be output by the banknote handling apparatus 10, and based on, for example, the model of banknote handling apparatus 10. The second identification information is generated to comprise information on an operation result of the banknote handling apparatus 10.

The operation result of the banknote handling apparatus 10 includes, for example, the operation result of the light sensor 13, the operation result of the recognition sensor 14, and the operation result of the movable unit 15, which have been mentioned above. Meanwhile, the identification information generation unit 23 generates the second identification information such that second identification information for identification of different banknote handling apparatuses 10 differs from each other. Further, the identification information generation unit 23 may generate the second identification information such that second identification information in different registration processing differs from each other, even in the second identification information for identification of the same banknote handling apparatus 10.

The identification information output unit 24 outputs the second identification information generated by the identification information generation unit 23 to the terminal device 2.

The identification unit 25 identifies the banknote handling apparatus 10. The identification unit 25 confirms whether the second identification information generated by the identification information generation unit 23 and the first identification information output from the output unit 16e of the banknote handling apparatus 10 match with each other. In a case where the second identification information generated by the identification information generation unit 23 and the first identification information output from the output unit 16e match with each other, the identification of the banknote handling apparatus 10 is successful.

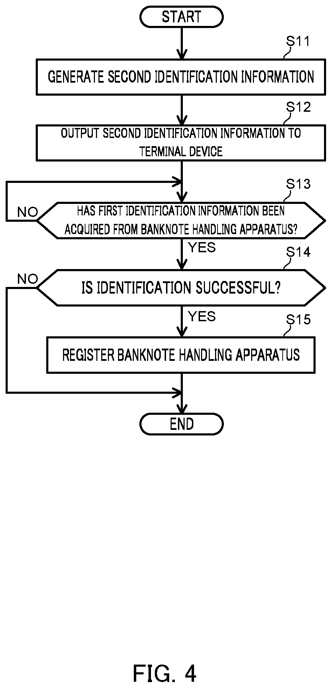

Next, a program of the registration processing executed by the external apparatus 20 will be described. The description will be given with reference to a flowchart illustrated in FIG. 4 from a state where the external apparatus 20 permits the user to log in and the registration processing is started. The user is a staff who actually uses the banknote handling apparatus 10 at a bank and/or a retail store where the banknote handling apparatus 10 is installed. The user may also be a vendor worker for the banknote handling apparatus 10 who installs the banknote handling apparatus 10. The user is in a logged-in state to the external apparatus 20 when a user ID and a password which the user has transmitted from the terminal device 2 to the external apparatus 20 match with the user ID and the corresponding password which are stored in the memory unit 21 of the external apparatus 20. The identification of the user (first identification) who attempts to register the banknote handling apparatus 10 is completed.

The user then transmits to the external apparatus 20, information on the banknote handling apparatus 10 which he/she intends to register, by using the terminal device 2. Prior to transmitting the information on the banknote handling apparatus 10, the user may transmit, to the external apparatus 20, a command requesting the registration processing, by using the terminal device 2.

The external apparatus 20 matches the acquired information on the banknote handling apparatus 10 with the information on the banknote handling apparatus 10 stored in the memory unit 21. As a result of matching, in a case where matched information is present, the external apparatus 20 starts the registration processing. In a case where matched information is absent, the external apparatus 20 transmits, to the terminal device 2, information indicating that the registration processing cannot be started. In addition, when the memory unit 21 stores the information on the user and the information on the banknote handling apparatus 10 in association with each other, the information of the user who is permitted to log in may be matched with the information on the associated user. In a case where these pieces of information on the user match with each other, the external apparatus 20 starts the registration processing. In a case where these pieces of information on the user do not match with each other, the external apparatus 20 transmits, to the terminal device 2, information indicating that the registration processing cannot be started. The registration processing comprises generation processing of generating the second identification information and matching processing of matching the first identification information and the second identification information with each other.

The external apparatus 20 specifies information on the banknote handling apparatus 10 stored in the memory unit 21, based on the acquired information on the banknote handling apparatus 10. The external apparatus 20, in S11, performs the generation processing of generating the second identification information such that an operation result to be acquired from the banknote handling apparatus 10 is comprised, by using the specified information that can be output by the banknote handling apparatus 10.

The operation result to be acquired from the banknote handling apparatus 10 includes, for example, the following first to third operation results. The first operation result is an operation result of the first light sensor 13a. The first operation result may be an operation result indicating that a detection signal from the first light sensor 13a has changed. The first operation result may also be an operation result indicating that the detection signal from the first light sensor 13a has changed from a state where no object is detected to a state where an object is detected. The second operation result is an operation result of the first movable unit 15a. The second operation result may also be an operation result indicating that a state of the first movable unit 15a has changed. The second operation result may also be an operation result indicating that the first movable unit 15a has changed from the close state to the open state. The third operation result is an operation result of the recognition sensor 14 and is, for example, detection of a banknote of a particular type (e.g., 1000-yen bill). Note that, the third operation result may include an operation result of the light sensor 13 caused by transportation of a banknote (specifically, operation results of second to fourth, and sixth light sensors 13b to 13d, and 13f).

The external apparatus 20 outputs the second identification information to the terminal device 2 in S12. Specifically, the external apparatus 20 outputs, to terminal device 2, an instruction content to the user corresponding to the first to third operation results such that the banknote handling apparatus 10 outputs the above-mentioned first to third operation results as the first identification information.

For the first operation result, for example, it is output as an instruction content to place a banknote on the hopper unit 11a so that the operation result of the first light sensor 13a is output. For the second operation result, for example, it is output as an instruction content to displace the first movable unit 15a to the open position so that the operation result of the first movable unit 15a is output. For the third operation result, for example, it is output as an instruction content to transport a particular banknote (e.g., 1000-yen bill) so that the operation result of the particular banknote is output.

An instruction content output from the external apparatus 20 is displayed on the display operation unit 2a of the terminal device 2. The user grasps the instruction content by the displaying of the operation unit 2a.

The external apparatus 20 determines whether the first identification information output from the banknote handling apparatus 10 in S13 has been acquired. In a case where the banknote handling apparatus 10 outputs no first identification information, the external apparatus 20 acquires no first identification information. In this case, the external apparatus 20 determines to be NO in S13 and repeatedly executes S13.

Meanwhile, in a case where the user operates the banknote handling apparatus 10 based on the instruction content displayed on the display operation unit 2a after putting the banknote handling apparatus 10 into the registration mode, the banknote handling apparatus 10 outputs the first identification information to the external apparatus 20.

Specifically, when the user places a banknote on the hopper unit 11a based on the instruction display to place the banknote on the hopper unit 11a corresponding to the first operation result, the detection signal from the first light sensor 13a changes from the non-light-receiving signal to the light-receiving signal. The acquisition unit 16d detects the detection signal from the first light sensor 13a and generates an operation result of the first light sensor 13a. The operation result may be a result indicating that the first light sensor 13a has detected the received light signal. The operation result may also be a result indicating that the detection signal detected by the first light sensor 13a has changed from the non-light-receiving signal to the light-receiving signal. The operation result may also be a result indicating that the first light sensor 13a has changed from a state where no object is detected to a state where an object is detected. The output unit 16e outputs the operation result of the first light sensor 13a acquired and generated by the acquisition unit 16d as first identification information.

Further, when the user displaces the first movable unit 15a to the open position based on the instruction display to displace, to the open position, the first movable unit 15a corresponding to the second operation result, the detection signal from the third light sensor 13c changes from the received light signal to the non-light receiving signal. The acquisition unit 16d acquires the detection signal from the third light sensor 13c and generates an operation result of the third light sensor 13c. The operation result may be a result indicating that the third light sensor 13c has detected the non-light receiving signal. The operation result may also be a result indicating that the detection signal detected by the third light sensor 13c has changed from the light-receiving signal to the non-light-receiving signal. The operation result may also be a result indicating that the third light sensor 13c has changed from a state where no object is detected to a state where an object is detected. The output unit 16e outputs the operation result of the third light sensor 13c acquired and generated by the acquisition unit 16d as first identification information. Incidentally, as mentioned above, the acquisition unit 16d may monitor also the changes in the detection signals from the other light sensors 13 and detect that the first movable unit 15a has been displaced from the close position to the open position on the basis that the detection signals from the other light sensors 13 have not changed although the detection signal from the third light sensor 13c changed from the light-receiving signal to the non-light-receiving signal. In this case, the operation result may be a result indicating that the first movable unit 15a has been displaced from the close position to the open position.

Furthermore, when the user transports a particular banknote based on the instruction display to transport the particular banknote corresponding to the third operation result, the recognition unit 16c recognizes the particular banknote based on the detection signal from the recognition sensor 14 and outputs a recognition result to the acquisition unit 16d. Incidentally, in this case, the first light sensor 13a outputs a detection signal indicating that the banknote is taken in from the hopper unit 11a. Further, at least the second to fourth light sensors 13b to 13d output the detection signals indicating that the banknote has passed through. Further, any of the fifth light sensor 13e and the seventh light sensor 13g outputs the detection signal indicating that the banknote has been transported. The acquisition unit 16d acquires the recognition result from the recognition unit 16c and generates an operation result of the recognition sensor 14. The operation result comprises information of the recognized banknote. The information of the banknote may comprise at least one of the type of banknote, information displayed on the banknote (e.g., character information such as serial number), the size of banknote, and whether magnetic ink is used. The output unit 16e outputs the operation result of the recognition sensor 14 acquired and generated by the acquisition unit 16d as first identification information.

When the first identification information is output from the output unit 16e of the banknote handling apparatus 10, the external apparatus 20 acquires the first identification information. In this case, the external apparatus 20 determines to be YES in S 13, performs matching processing of the first identification information and the second identification information in S14, and identifies the banknote handling apparatus 10. The matching processing is a process for confirming whether the second identification information generated in S 12 and the first identification information acquired in S 13 match with each other.

As a result of the matching processing, when the second identification information generated in S 12 and the first identification information acquired in S 13 match with each other, the external apparatus 20 determines that the identification of the banknote handling apparatus 10 (second identification) is successfully made. This results in two kinds of identification: the identification of the user who attempts to register the banknote handling apparatus 10 (first identification) and the identification of the banknote handling apparatus 10 to be registered (second identification). In this case, the external apparatus 20 determines to be YES in S14 and registers the banknote handling apparatus 10 in S15. Incidentally, when the first identification information and the second identification information comprise a plurality of operation results, the matching processing may be a process of matching also an order of the plurality of operation results. Alternatively, the matching processing may be a process in which the order of the plurality of operation results is not matched.

Meanwhile, for example, when the user displaces the second movable unit 15b to the open position even though the displacement, to the open position, of the first movable unit 15a corresponding to the second operation result is displayed on the display operation unit 2a as an instruction content, an operation result of the fourth light sensor 13d is output to the external apparatus 20 as the first identification information.

The operation result of the fourth light sensor 13d is different from the operation result of the third light sensor 13c that is the operation result corresponding to the instruction content indicating that the first movable unit 15a is displaced to the open position. Therefore, the second identification information generated in S12 and the first identification information acquired in S13 do not match with each other. In this case, the external apparatus 20 determines to be NO in S14 and ends the program. In this situation, the user repeats the identification of the banknote handling apparatus 10 from the beginning.

According to the first embodiment of the present disclosure, the banknote handling apparatus 10 is a banknote handling apparatus 10 that handles a banknote. The banknote handling apparatus 10 comprises an acquisition unit 16d that acquires information on an operation result of the banknote handling apparatus 10 and an output unit 16e that outputs, to an external apparatus 20, first identification information which comrpises information on the operation result of the banknote handling apparatus 10 acquired by the acquisition unit 16d and which is used for identification of the banknote handling apparatus 10.

According to this, since the information on the operation result of the banknote handling apparatus 10 is comprised in the identification information used for the identification of the banknote handling apparatus 10, the security of identification information can be improved.

The banknote handling apparatus 10 further comprises a light sensor 13 and a recognition sensor 14 that detect information on a banknote. The information on the operation result of the banknote handling apparatus 10 is information on operation results of the light sensor 13 and the recognition sensor 14.

According to this, since the operation results of the light sensor 13 and the recognition sensor 14 that detect the information on the banknote are comprised in the identification information, the security of identification information can be reliably improved.

Further, the information on the banknote includes the presence or absence of the banknote, a transport state of the banknote, and information of the banknote.

This allows the identification information to comprise the presence or absence of the banknote, the transport state of the banknote, and the information of the banknote. Therefore, the security of identification information can be more reliably improved.

The banknote handling apparatus 10 further comprises a main body unit 11 and a movable unit 15 disposed displaceably with respect to the main body unit 11. The information on the operation result of the banknote handling apparatus 10 is information on an operation result of the movable unit 15.

This allows the identification information to comprise the information on the operation result of the movable unit 15. Therefore, the security of identification information can be reliably improved.

The banknote handling apparatus 10 further comprises an operation unit 11b disposed on the main body unit 11. The movable unit 15 is disposed on a part other than the operation unit 11b in the main body unit 11.

This allows the identification information to comprise the information on the operation result of the movable unit 15 disposed on the part other than the operation unit 11b. Therefore, the security of identification information can be more reliably improved.

Further, the operation unit 11b comprises at least one of a display unit that displays a state of processing by the banknote handling apparatus 10 and an input unit for performing settings of the banknote handling apparatus 10.

The banknote handling apparatus 10 further comprises the main body unit 11, the movable unit 15 disposed displaceably with respect to the main body unit 11, and a light sensor 13 that detects information on the banknote. The light sensor 13 is disposed to operate when the movable unit 15 is displaced. The acquisition unit 16d acquires information on the operation result of the light sensor 13 when the movable unit 15 is displaced, as information on the operation result of the banknote handling apparatus 10.

According to this, the information on the operation result of the movable unit 15 is detected by the light sensor 13 and the recognition sensor 14 that detect the information on the banknote. Thus, since there is no need to dispose a sensor only for detecting an operation result of the movable unit 15, the security of identification information can be improved at a relatively low cost.

Further, a medium for the banknote handling apparatus 10 is a banknote.

According to this, the security of identification information can be improved for a banknote handling apparatus that handles a banknote.

Further, according to the first embodiment of the present disclosure, a banknote handling system 1 is a handling system comprising a banknote handling apparatus 10 that handles a banknote and an external apparatus 20 communicatively connected with the banknote handling apparatus 10. The banknote handling apparatus 10 comprises an acquisition unit 16d that acquires information on an operation result of the banknote handling apparatus 10 and an output unit 16e that outputs, to the external apparatus 20, first identification information comprising the information on the operation result of the banknote handling apparatus 10 acquired by the acquisition unit 16d. The external apparatus 20 comprises an identification unit 25 that identifies the banknote handling apparatus 10 by using the first identification information output by the output unit 16e.

According to this, since the information on the operation result of the banknote handling apparatus 10 is comprised in the identification information used for the identification of the banknote handling apparatus 10, the security of identification information can be improved.

Further, according to the first embodiment of the present disclosure, an identification method for the banknote handling apparatus 10 comprises: acquiring, in the banknote handling apparatus 10, information on an operation result of the banknote handling apparatus 10; outputting first identification information comprising information on the operation result of the banknote handling apparatus 10 from the banknote handling apparatus 10 to an external apparatus 20; and identifying, in the external apparatus 20, the banknote handling apparatus 10 by using the first identification information.

According to this, since the information on the operation result of the banknote handling apparatus 10 is comprised in the identification information used for the identification of the banknote handling apparatus 10, the security of identification information can be improved.

### <Second Embodiment>

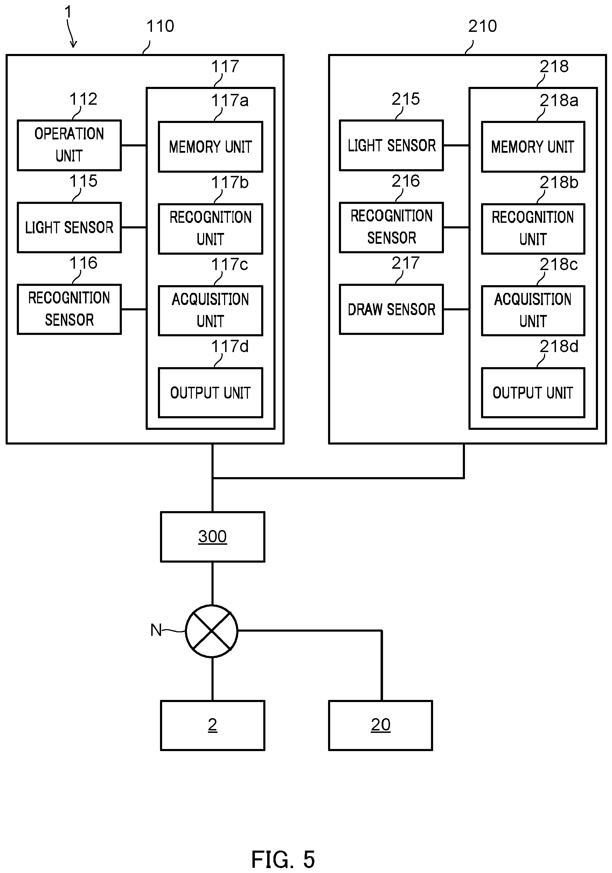

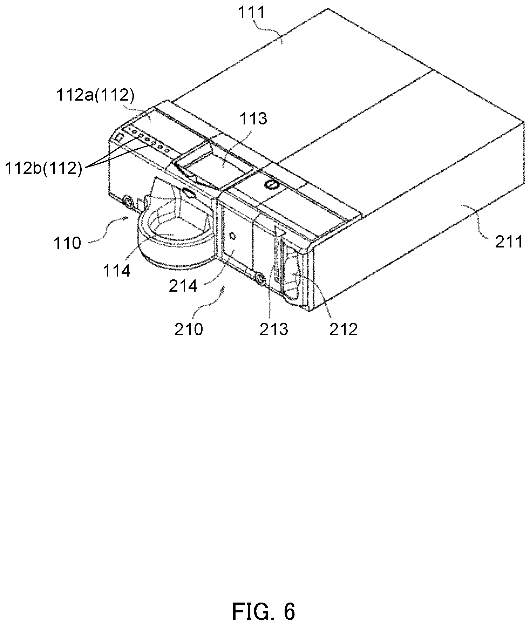

Next, a valuable medium handling system according to a second embodiment of the present disclosure will be described with reference to FIGS. 5 and 6, mainly with respect to parts different from the above-mentioned first embodiment. In the second embodiment, instead of the banknote handling apparatus 10 of the first embodiment, a coin change machine 110 and a banknote change machine 210 are communicatively connected to an external apparatus 20. The coin change machine 110 and the banknote change machine 210 are each exemplary "valuable medium handling apparatus."

The coin change machine 110 performs deposit and dispense processing of coins. A valuable medium handled by the coin change machine 110 is a coin. The banknote change machine 210 performs deposit and dispense processing of banknotes. A valuable medium handled by banknote change machine 210 is a banknote. The coin change machine 110 and the banknote change machine 210 are communicatively connected to the external apparatus 20 via a POS register 300 and a network N.

The coin change machine 110 comprises a main body unit 111, an operation unit 112, a coin inlet unit 113, a coin outlet unit 114, a light sensor 115, a recognition sensor 116, and a control unit 117.

The operation unit 112 comprises a display unit and an input unit. The display unit is, for example, a display 112a. The input unit is, for example, a plurality of switches 112b. The operation unit 112 may comprise only one of the display unit and the input unit.

The coin inlet unit 113 is a portion where a coin is inserted. The coin outlet unit 114 is a portion where a coin is dispensed as a change. The light sensor 115 detects that a coin is inserted into the coin inlet unit 113. The recognition sensor 116 is a sensor that detects information for recognizing a coin. The recognition sensor 116 detects an image of the coin. The recognition sensor 116 may detect a feature of the coin comprising at least one of a diameter, a thickness, a material, and a magnetic characteristic.

The control unit 117 comprises a memory unit 117a, a recognition unit 117b, an acquisition unit 117c, and an output unit 117d. The memory unit 117a stores recognition information for recognizing the type of coin, such as an image, a diameter, a thickness, a material, and a magnetic characteristic of the coin. The recognition unit 117b compares the recognition information on the coin stored in the memory unit 117a with the image and/or the feature of the coin detected by the recognition sensor 116 and then recognizes the type of coin.

When the coin change machine 110 is registered in the external apparatus 20, the identification information generation unit 23 of the external apparatus 20 generates second identification information to comprise information on an operation result of the coin change machine 110. The operation result of the coin change machine 110 includes, for example, an operation result of the light sensor 115 corresponding to the insertion of a coin, a recognition result of the recognition unit 117b based on a detection signal from the recognition sensor 116 (e.g., type of coin), and the like.

The recognition result of the recognition unit 117b and the detection signal from the light sensor 115 are acquired by the acquisition unit 117c and are output from the output unit 117d as first identification information.

The banknote change machine 210 comprises a main body unit 211, a banknote inlet unit 212, a banknote outlet unit 213, a storage unit 214, a light sensor 215, a recognition sensor 216, a draw sensor 217, and a control unit 218. The banknote change machine 210 comprises no operation unit.

The banknote inlet unit 212 is a portion where a banknote is inserted. The banknote outlet unit 213 is a portion where a banknote is dispensed as a change. The storage unit 214 is a portion for storing banknotes in order to take out the banknotes in the main body unit 211. The storage unit 214 is pulled out by being slid forward from the main body unit 211 when banknotes are taken out.

The light sensor 215 detects that a banknote has been inserted into the banknote inlet unit 212. The recognition sensor 216 is a sensor that detects information for recognizing a banknote.

The draw sensor 217 is a sensor that detects that the storage unit 214 has been pulled out. The draw sensor 217 is, for example, a magnetic switch.

The control unit 218 comprises a memory unit 218a, a recognition unit 218b, an acquisition unit 218c, and an output unit 218d. The memory unit 218a stores an image of a feature portion of a banknote and the like for recognizing the type of banknote. A function of the recognition unit 218b is similar to that of the recognition unit 16c of the banknote handling apparatus 10 of the first embodiment. Further, the information for recognition stored in the memory unit 218a is similar to the information stored in the memory unit 16b of the banknote handling apparatus 10 of the first embodiment.

Further, when the banknote change machine 210 is registered in the external apparatus 20, the identification information generation unit 23 of the external apparatus 20 generates second identification information to comprise information on an operation result of the banknote change machine 210. The operation result of the banknote change machine 210 comprises a detection signal from the light sensor 215 by the insertion of a banknote, a recognition result of the recognition unit 218b based on a detection signal from the recognition sensor 216 (e.g., face/back of banknote), an operation result of the storage unit 214, and the like. The operation result of the storage unit 214 is a detection signal from the magnetic sensor.

The recognition result of the recognition unit 218b, a non-received light signal from the light sensor 215, and a detection signal from the draw sensor 217 are acquired by the acquisition unit 218c and are output from the output unit 218d as first identification information.

Meanwhile, when both the coin change machine 110 and the banknote change machine 210 are registered in the external apparatus 20, the identification information generation unit 23 of the external apparatus 20 may cause the second identification information to comprise both information on the operation result of the coin change machine 110 and information on the operation result of the banknote change machine 210. In this case, the coin change machine 110 and the banknote change machine 210 can be registered in the external apparatus 20 in association with each other.

According to the second embodiment of the present disclosure, even in the banknote change machine 210 comprising no operation unit, the security of identification information can be improved. Further, it is possible to register a plurality of apparatuses in one-time identification.

While a valuable medium handling apparatus, a valuable medium handling system, and an identification method according to one or more aspects have been described based on the embodiments, the present disclosure is not limited to these embodiments. Without departing from the spirit of the present disclosure, the scope of one or more aspects may comprise various variations envisioned by those skilled in the art and made to the present embodiment, and/or a form constructed by combining the components in different embodiments.

In the embodiments described above, the operation result of the banknote handling apparatus 10 comprised in the identification information may be an operation result of the operation unit 11b. The operation result of the operation unit 11b is, for example, a detection signal output by an operation of the switch 11b2. The operation result of the banknote handling apparatus 10 may also be an operation result of a power supply operation unit (not illustrated).

The identification information comprises the operation result of the banknote handling apparatus 10. The operation result of the banknote handling apparatus 10 comprises an operation result of the sensor. The sensor detects the information on a banknote (valuable medium). The following may be applied as the information on the banknote (valuable medium). For example, the information on the banknote may be a counting result of the counting unit 16a when the user transports the specified number of banknotes to the transport unit 12. In addition, the information on the banknote may be operation results of the first to seventh light sensors 13a to 13g when the user transports the banknote from the hopper unit 11a to the stacking unit 11c or the reject unit 11d. Moreover, the information on the banknote may be the operation result of the fifth light sensor 13e output by the user placing the banknote on the reject unit 11d. Furthermore, the information on the banknote may be the operation result of the seventh light sensor 13g output by the user placing the banknote on the stacking unit 11c. Further, the information on the banknote may be a recognition result of the recognition sensor 14 output by the user transporting the banknote in which the magnetic ink having a particular magnetic characteristic is used. Further, the information on the banknote may be a serial number recognized by the recognition sensor 14 by the user transporting the banknote on which the specified serial number is described. Further, the information on the banknote may comprise at least one of a fitness type of the banknote, a fitness factor of the banknote, a new/old type of the banknote, a series of the banknote, and an issuing bank for the banknote.

Besides, the operation result of the sensor may be a detection result output by the sensor by detecting an object other than a banknote (valuable medium). For example, the operation result of the sensor may be the operation result of the fifth light sensor 13e output by the user holding his/her hand to the reject unit 11d. The operation result of the sensor may also be the operation result of the seventh light sensor 13g output by the user holding his/her hand to the stacking unit 11c.

Further, the operation result of the banknote handling apparatus 10 comprised in the identification information may be an operation result corresponding to the handling of the banknote, but instead, the operation result may be an operation result corresponding to handling of a medium of a predetermined size other than the banknote (e.g., paper slip). In this case, the size of medium calculated by the recognition unit 16c based on the detection signal from the light sensor 13 or the recognition sensor 14 is output as first identification information.

Further, a medium on which predetermined information is described may be used. The predetermined information is, for example, character information and/or graphic information. In this case, the character information and/or the graphic information recognized by the recognition unit 16c based on an image of the medium detected by the recognition sensor 14 is output as first identification information. For example, the media on which the predetermined information is described may be a check. Characters are printed on the check by magnetic ink. The magnetic ink characters read by the second recognition sensor 14b may be output as the first identification information.

Further, although the identification information generation unit 23 generates second identification information such that the generated pieces of second identification information differ from each other, the same identification information may be generated, instead. For example, the second identification information used for identification of the same banknote handling apparatus 10 may be always the same second identification information. Further, for example, when a plurality of banknote handling apparatuses 10 of the same type is registered in one-time registration processing, second identification information used for identification of the plurality of banknote handling apparatuses 10 may be the same second identification information. Further, for example, when the same user performs the registration processing, the same second identification information may be used even for different banknote handling apparatuses 10 to be registered.

Further, in the registration processing of registering the banknote handling apparatus 10, the first operation result may be a predetermined operation of putting the banknote handling apparatus 10 into the registration mode, for the second identification information generated by the identification information generation unit 23. In this case, the banknote handling apparatus 10 turns into the registration mode according to the first operation result. In this situation, the banknote handling apparatus 10 outputs, as first identification information, an operation result of the banknote handling apparatus 10 after the second operation result.

Further, although the external apparatus 20, in the matching processing of S14, matches the first identification information comprising a plurality pieces of information at one time, instead of this, a plurality of operation results comprised in the first identification information may be individually matched for each output from the banknote handling apparatus 10. For example, the external apparatus 20 receives the first operation result from the output unit 16e of the banknote handling apparatus 10. The identification unit 25 of the external apparatus 20 matches the received first operation result and the first operation result comprised in the second identification information generated in S12. When both results do not match with each other, the identification is determined to have been failed, and the registration processing is ended. When both results match with each other, the external apparatus 20 receives the second operation result from the output unit 16e of the banknote handling apparatus 10. Thereafter, the second operation result and the third operation result are subjected to the matching processing, similar to the matching processing for the first operation result. When all the operation results match with each other as a result of the matching processing, the identification of the banknote handling apparatus 10 is determined to have been successfully made, and the banknote handling apparatus 10 is registered.

Meanwhile, the sensor for detecting the information on the operation result of the banknote handling apparatus 10 is not limited to a light sensor. For example, the information on the operation result of the movable unit 15 may be, for example, information based on a detection signal from a mechanical switch or a proximity sensor.

Further, instead of the banknote handling apparatus 10, the coin change machine 110, and the banknote change machine 210 in the above-mentioned embodiments, an apparatus into which a banknote and/or a coin are/is inserted, such as a vending machine or ticket vending machine may be applied to the banknote handling system 1. Additionally, for example, a reception apparatus into which a predetermined paper slip or ticket is inserted, and which is installed in a facility and the like may be applied. In this case, a medium is a predetermined paper slip or ticket.

Further, in the above-mentioned embodiments, when the banknote handling apparatus 10 is registered by the registration processing (FIG. 4), an apparatus that cooperates with the banknote handling apparatus 10 may be collectively registered. For example, the memory unit 21 stores in advance information on a coin handling apparatus which is an exemplary valuable medium handling apparatus, in association with the information on the banknote handling apparatus 10. Then, when the banknote handling apparatus 10 is registered in the external apparatus 20 by the registration processing (S15), the coin handling apparatus associated with the banknote handling apparatus 10 may also be registered in the external apparatus 20. For the apparatus associated to the banknote handling apparatus 10, a printer, a barcode handling apparatus, and the like may be comprised.

The disclosure of Japanese Patent Application No. 2020-052717, filed on March 24, 2020, including the specification, drawings and abstract, is incorporated herein by reference in its entirety.

### Industrial Applicability

The present disclosure can be used widely for a valuable medium handling apparatus, a valuable medium handling system, and an identification method.

## Claims

1. A valuable medium handling apparatus that handles a valuable medium, the valuable medium handling apparatus comprising:
an acquisition unit that acquires information on an operation result of the valuable medium handling apparatus; and
an output unit that outputs, to an external apparatus, first identification information which comprises the information on the operation result of the valuable medium handling apparatus acquired by the acquisition unit and which is used for identification of the valuable medium handling apparatus.

2. The valuable medium handling apparatus according to claim 1, further comprising a sensor that detects information on the valuable medium, wherein
the information on the operation result of the valuable medium handling apparatus comprises information on an operation result of the sensor.

3. The valuable medium handling apparatus according to claim 2, wherein the information on the valuable medium is at least one of the presence or absence of the valuable medium, a transport state of the valuable medium, and/or information of the valuable medium.

4. The valuable medium handling apparatus according to any one of claims 1 to 3, further comprising:
a main body unit; and
a movable unit disposed displaceably with respect to the main body unit, wherein
the information on the operation result of the valuable medium handling apparatus comprises information on an operation result of the movable unit.

5. The valuable medium handling apparatus according to claim 4, further comprising an operation unit disposed on the main body unit, wherein
the movable unit is disposed on a part other than the operation unit in the main body unit.

6. The valuable medium handling apparatus according to claim 5, wherein the operation unit comprises at least one of a display unit and/or an input unit, the display unit displaying a state of processing by the valuable medium handling apparatus, the input unit being for performing a setting of the valuable medium handling apparatus.

7. The valuable medium handling apparatus according to any one of claims 4 to 6, wherein the movable unit is a storage unit that stores the valuable medium and is pulled out when the valuable medium is taken out.

8. The valuable medium handling apparatus according to claim 1, further comprising:
a main body unit;
a movable unit disposed displaceably with respect to the main body unit; and
a sensor that detects information on the valuable medium, wherein:
the sensor is disposed to operate when the movable unit is displaced; and
the acquisition unit acquires information on an operation result of the sensor when the movable unit is displaced, as the information on the operation result of the valuable medium handling apparatus.

9. The valuable medium handling apparatus according to any one of claims 1 to 8, wherein the valuable medium is at least one of a banknote and/or a coin.

10. A valuable medium handling system comprising a valuable medium handling apparatus that handles a valuable medium and an external apparatus communicatively connected with the valuable medium handling apparatus, wherein
the valuable medium handling apparatus comprises:
an acquisition unit that acquires information on an operation result of the valuable medium handling apparatus; and
an output unit that outputs, to the external apparatus, first identification information comprising the information on the operation result of the valuable medium handling apparatus acquired by the acquisition unit, and wherein
the external apparatus comprises an identification unit that identifies the valuable medium handling apparatus by using the first identification information output by the output unit.

11. The valuable medium handling system according to claim 10, wherein
the external apparatus further comprises a generation unit that generates second identification information, wherein
the identification unit identifies the valuable medium handling apparatus by matching the first identification information and the second identification information.

12. The valuable medium handling system according to claim 11, wherein
the output unit outputs information on the valuable medium handling apparatus to the external apparatus, and wherein
the generation unit generates the second identification information by using the information on the valuable medium handling apparatus input from the output unit.

13. An identification method for a valuable medium handling apparatus, the identification method comprising:
acquiring, in the valuable medium handling apparatus, information on an operation result of the valuable medium handling apparatus that handles a valuable medium;
outputting first identification information comprising the information on the operation result of the valuable medium handling apparatus from the valuable medium handling apparatus to an external apparatus; and
identifying, in the external apparatus, the valuable medium handling apparatus by using the first identification information.

14. The identification method for the valuable medium handling apparatus according to claim 13, further comprising generating second identification information in the external apparatus, wherein
in the identifying, the valuable medium handling apparatus is identified by matching the first identification information and the second identification information.

15. The identification method for the valuable medium handling apparatus according to claim 14, further comprising outputting information on the valuable medium handling apparatus from the valuable medium handling apparatus to the external apparatus, wherein
in the generating, the second identification information is generated in the external apparatus by using the information on the valuable medium handling apparatus input from the external apparatus.
